# EUROPEAN PATENT SPECIFICATION

(11) **EP 1 258 308 B1**
(45) Date of publication and mention of the grant of the patent: **10.11.2004**
(21) Application number: 02425301.5
(22) Date of filing: 15.05.2002
(51) Int. Cl.: B23D 59/00

(54) **A tool control unit for machines for cutting wooden or similar workpieces**
Werkzeugsteuerung für Maschinen zum Schneiden von Holz oder dergleichen
Unité de contrôle d'un outil pour machines de découpe d'une pièce à usiner en bois ou similaire

(30) Priority: 18.05.2001 IT BO20010313
(43) Date of publication of application: 20.11.2002
(73) Proprietor: SCM GROUP S.p.A., 47900 Rimini (IT)
(72) Inventor: Pucci, Aureliano, 47900 Rimini (IT)
(74) Representative: Lanzoni, Luciano

(56) References cited:
- EP-A- 0 529 224
- WO-A-93/06961
- DE-A- 2 312 686
- US-A- 3 698 138
- US-A- 4 410 846
- PATENT ABSTRACTS OF JAPAN vol. 011, no. 188 (M-599), 17 June 1987 (1987-06-17) & JP 62 015004 A (HITACHI KOKI HARAMACHI:KK), 23 January 1987 (1987-01-23) & JP 62 015004 A (HITACHI KOKI HARAMACHI:KK) 17 June 1987 (1987-06-17)
- PATENT ABSTRACTS OF JAPAN vol. 016, no. 135 (M-1230), 6 April 1992 (1992-04-06) & JP 03 295604 A (SHINKO KOGYO CO LTD), 26 December 1991 (1991-12-26)

## Description

The present invention relates to a tool control unit which can be applied to machines for cutting wooden or similar workpieces. Such a unit, as per the preamble of claim 1, is known from document JP 62 015004 A.

In particular, but without limiting the scope of the invention, the unit may be applied to circular saws for machining solid wood, panels, veneered, plastic or light alloy workpieces.

The above-mentioned machines for working wooden workpieces normally comprise a base supporting a fixed horizontal surface which forms a machine work table on which the panel to be machined is placed and moved. The panel, therefore, moves towards the tool which is substantially at the centre of the table.

The tool consists of a circular saw, projecting from the work table through a slot, and supported by a blade holder unit comprising a circular plate, to which the shaft is directly attached. The tool is keyed to the shaft, which is connected to a drive unit.

These machines are designed to accept a set of blades with different diameters, fitted by the operator according to the type of material and the thickness of the workpiece to be machined.

Therefore, when changing the tool size, it is preferable, although not necessary, to change the tool speed of rotation, both to optimise the quality of the cut and above all for safety reasons, since an incorrect speed may cause excessive vibrations, tool breakage or workpiece seizing on the tool.

At present, the existing machines have a manual mechanical gearbox, connected to the drive unit, and designed to allow at least three different speeds to be transmitted to the shaft, that is to say, one for each type of circular saw present, as these machines normally have three tools which cover almost all types of machining on them.

Another known solution for the gearbox in these machines is given by applying an "inverter" unit which the operator can still set manually each time the circular blade is changed, acting on the motor speed in accordance with known techniques.

However, it was found that such solutions have disadvantages due to the need to operate the gears manually. Therefore, such operations must always be performed by the operator who, in some cases, may forget to set the correct speed during a blade change, putting the condition of the tool at risk or risking a poor quality cut on the workpiece.

It is known from document JP 03 295604 a device for indicating saw diameter of circular saw machine. This document discloses a device to enable the saw diameter to be recognised and thus improve the workability by detecting the existence of a circular saw in the diameter direction and by conducting an indication corresponding to the directing output thereof.

Document JP 62 015004 discloses a machine tool diameter detecting device anda rotating speed control device for drilling machine. This document is related to a drilling machine to increase working efficiency by detecting the diameter of a machine tool without contact by means of a variable reactance element and making optimum of revolution control for the main rotary axis based on the detected signal.

It is also known from document US 4 410 846 an electric tool with microcomputer, in particular a hand-held in which present operating conditions such as the speed of the drill bit, the direction of rotation of the bit, the presently engaged gear, etc. are indicated by a display which has a plurality of fields which are selectively lit. The display indications are all computer-controlled.

In other words, at present there is no control and feedback for comparing the speeds set, reached and the recommended, and the size of the tool fitted.

The aim of the present invention is, therefore, to overcome the above-mentioned disadvantages by providing a tool control unit which can be applied to machines for cutting wooden or similar workpieces, having a simple structure and without altering the machine architecture, but allowing a constant control of the size of the tool fitted relative to the speed which can be set for that tool.

Accordingly, the present invention provides a tool control unit for a machine for working wooden or similar workpieces according to independent claim 1 comprising a support base for a work table extending horizontally and designed to support the workpieces to be machined. The work table is equipped with a circular, motor-powered tool, supported by a tool holder unit and comprising at least a first circular plate, also forming the tool axis of rotation.

The technical features of the present invention, in accordance with the above-mentioned aims, are set out in the claims herein and the advantages more clearly illustrated in the detailed description which follows, with reference to the accompanying drawings, which illustrate a preferred embodiment of the invention without limiting the scope of the inventive concept, and in which
- Figure 1 is a schematic side view with some parts cut away to better illustrate others, of part of a machine for working wooden or similar workpieces equipped with a tool control unit made in accordance with the present invention;
- Figure 2 is a block diagram of part of the tool control unit illustrated in Figure 1.

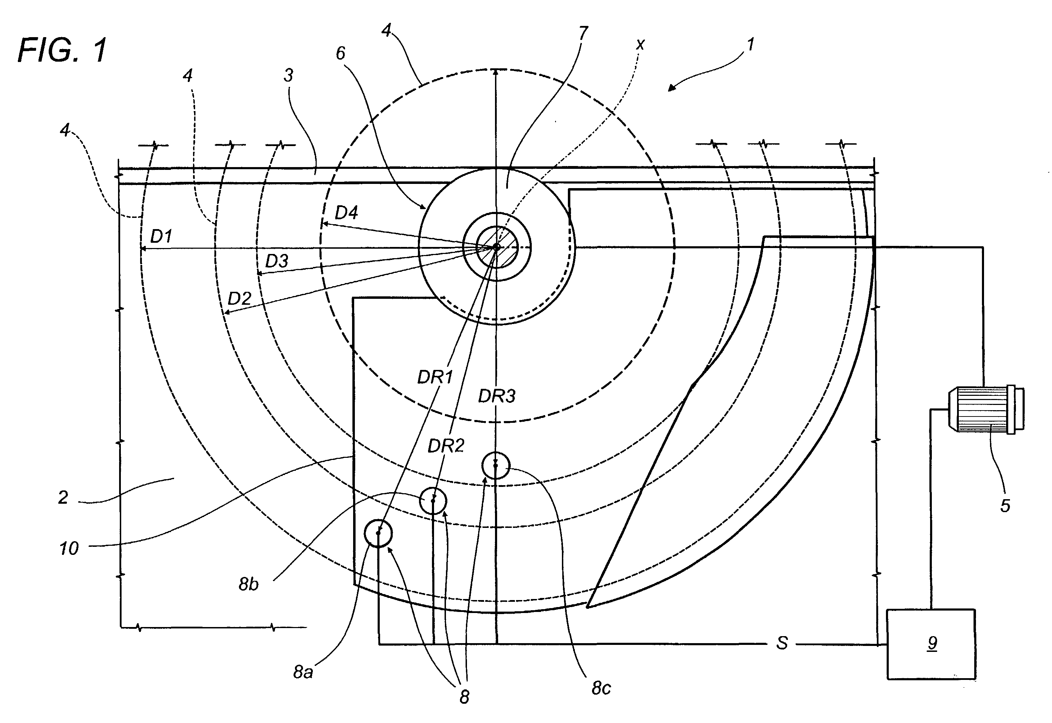

With reference to the accompanying drawings, and in particular with reference to Figure 1, the tool control unit disclosed is applied to machines for working wooden or similar workpieces, such as solid wood or veneered panels, or workpieces made of plastic or light alloy.

This machine, labelled 1 as a whole, and only partially illustrated in Figure 1 to show just the parts relevant to this description, may, by way of example, be a circular saw comprising a base 2 supporting a work table 3 which extends horizontally and is designed to support the workpieces to be machined (not illustrated here).

The work table 3 is equipped with at least one circular tool 4 (in this case a circular saw), controlled by a drive unit 5, partially projecting above the table 3 and supported by a tool holder unit 6 comprising at least a first circular plate 7 which also forms the tool 4 axis of rotation X.

In the embodiment described, the individual tools 4 which can be applied to the first plate 7 may, on each occasion, have different diameters D1, D2, D3, depending on the type of machining to be performed and are substituted manually by the operator (the dashed lines in Figure 1 show the different sizes of the tools 4 which can be fitted to the machine 1).

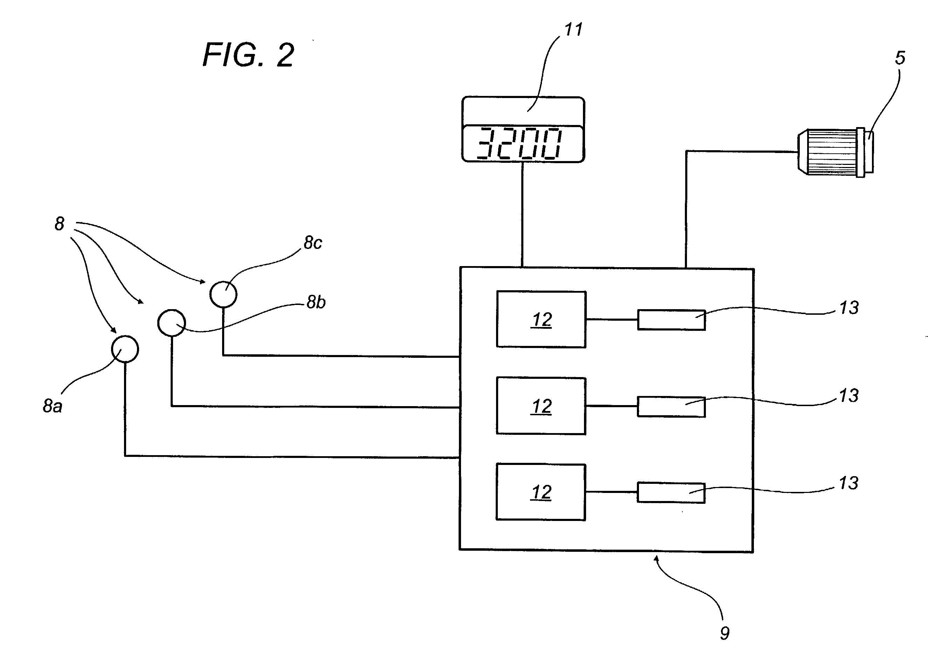

As illustrated in Figures 1 and 2, the machine 1 also comprises presence sensor means 8 and a reading and control unit 9.

More precisely, the presence sensor means 8 are located close to the first plate 7 supporting the tool 4 and can be positioned opposite the tool 4 fitted, to allow an unambiguous control of the tool 4 size, that is to say, its diameter.

The unit 9 for reading and controlling a signal S from the presence sensor means 8, corresponding to the size of the tool 4 fitted, may consist of a microprocessor unit for processing a speed which can be achieved by the tool 4 and is correlated to the size of the tool 4 fitted.

Returning to the presence sensor means, these may consist of proximity sensors 8.

In particular, in the embodiment illustrated and by way of example only, there is a plurality of proximity sensors 8a, 8b, 8c, numbering one less than the number of tools 4 which can be used (in this case four) and attached to a second plate 10, extending in a plane parallel with the first plate 7, and inserted between the latter and the base 2.

The second plate 10 is normally a tool 4 support and protection guard.

As is clearly illustrated in Figure 1, these three sensors 8 are arranged in radial directions, labelled DR1, DR2, DR3 relative to the tool 4 axis of rotation X. Each proximity sensor 8 is separated from the others by a centre-to-centre distance which depends on the tool 4 diameter D1, D2, D3, D4 to be checked.

In other words, the tool 4 with the largest diameter D1 is "detected" by all of the sensors 8a, 8b, 8c (three active signals S) present, a first intermediate D2 tool 4 is "detected" by the first two sensors 8b, 8c (two ON signals S and one OFF signal), a second intermediate D3 tool 4 is "detected" by the first sensor 8c (one ON signal S and two OFF signals), whilst the tool with the smallest diameter D4 is not detected by any of the sensors (three OFF signals S).

As illustrated in Figure 2, the reading and control unit 9 has at least one first permanent memory bank 12 for each tool 4 which can be fitted, used to store a data item indicating the maximum speed which can be achieved by that tool 4 and which can be viewed on a display 11.

The first permanent memory bank 12 can preferably store a data item indicating a range equivalent to the minimum and maximum speed which can be achieved by the tool 4, which again can be viewed on the display 11.

To increase the speed variation and control possibilities, the reading and control unit 9 has a second memory bank 13 for each tool 4 which can be fitted, designed to store a speed data item, which can be set manually, at least lower than the maximum which can be achieved by the tool 4 fitted. This data item which can be set should preferably remain within the minimum and maximum speed range defined for the tool 4.

The data which can be set manually is stored in the reading and control unit 9 second memory bank 13 and is displayed again the next time the same tool 4 is fitted. In this way, the operator can immediately check the optimum speed set previously for that tool and for the given machining.

Obviously, the reading and control unit 9 is connected to and acts on the tool 4 drive unit 5, allowing the tool 4 to be switched on or off at the speed set for that type of tool 4.

Therefore, in practice, the tool control unit fulfils the preset aims thanks to a simple, rational, safe structure which operators find easy to understand and use, and which, even without changing the speed setting after a tool changeover, guarantees that the control unit logic sets the new tool, checked by the sensors, to the last speed set by the same operator for that tool, or at least to a speed suitable for the tool.

This speeds up tool changeover operations, but above all guarantees that the tool will always operate at an appropriate speed, consequently improving the quality of the cutting as well as operating safety.

The invention described can be subject to modifications and variations without thereby departing from the scope of the claims Moreover, all the details of the invention may be substituted by technically equivalent elements.

## Claims

1. A tool control unit for a machine for working wooden or similar workpieces, the machine (1) being of the type comprising at least a base (2) which supports a work table (3) extending horizontally and designed to support the workpieces to be machined; on the work table (3) there being at least one circular, motor-powered (5) tool (4), supported by a tool holder unit (6) which comprises at least a first circular plate (7) which also forms the tool (4) axis of rotation (X), the tool control unit comprising:
- presence sensor means (8) close to the first plate (7) supporting the tool (4), it being possible to position the sensors opposite the tool (4) fitted, allowing an unambiguous control of the tool (4) size;
- a unit (9) for reading and controlling a signal (S) from the presence sensor means (8), the signal corresponding to the size of the tool (4) fitted, and for processing a speed (V) data item correlated to the size of the tool (4) fitted, **characterised in that** the reading and control unit (9) comprises at least a first permanent memory bank (12) for each tool (4) which can be fitted, containing a data item indicating a range equivalent to the minimum and maximum speed which can be achieved by the tool.

2. The unit according to claim 1, **characterised in that** the presence sensor means are proximity sensors (8).

3. The unit according to claim 1, **characterised in that** the presence sensor means (8) comprise a plurality of proximity sensors (8a, 8b, 8c) attached to a second plate (10), extending in a plane parallel with the first plate (7), and inserted between the latter and the base (2).

4. The unit according claim 3, **characterised in that** the number of proximity sensors (8) corresponds to the number of tools (4) which can be used on the machine minus one.

5. The unit according claim 3, **characterised in that** the plurality of proximity sensors (8) includes at least three arranged in radial directions relative to a tool (4) axis of rotation (X); each proximity sensor (8) being separated from the others by a centre-to-centre distance (ID) which depends on the diameter (D) of the tool (4) to be checked.

6. The unit according to claim 1, **characterised in that** the reading and control unit (9) has an element (11) for displaying the optimum speed for the tool (4) fitted.

7. The unit according to claim 1, **characterised in that** is possible to view the data item, indicating the speed achieved by the tool, on a display (11).

8. The unit according to claim 1, **characterised in that** the reading and control unit (9) has a second memory bank (13) for each tool (4) which can be fitted, designed to store a speed data item, which can be set manually, at least lower than the maximum speed which can be achieved by the tool (4) fitted.

9. The unit according to claim 8, **characterised in that** the reading and control unit (9) displays the speed set manually and stored in the second memory bank (13) the next time the tool (4) is fitted.

10. The unit according to claim 1, **characterised in that** the reading and control unit (9) is connected to and acts upon the tool (4) drive unit (5), allowing the tool (4) to be switched on or off according to the speed set for the tool (4).

## Patentansprüche

1. Werkzeugsteuereinheit für eine Maschine zum Bearbeiten von Holz oder ähnlichen Werkstücken, wobei die Maschine (1) vom Typ ist enthaltend wenigstens einen Sockel (2), welcher einen Arbeitstisch (3) trägt, der sich horizontal erstreckt und dazu bestimmt ist, die zu bearbeitenden Werkstücke zu tragen; wobei an dem Arbeitstisch (3) wenigstens ein kreisförmiges (5) Werkzeug (4) vorhanden ist, getragen von einer Werkzeughaltereinheit (6), welche wenigstens eine erste kreisförmige Platte (7) enthält, die auch die Drehachse (X) für das Werkzeug (4) bildet, wobei die Werkzeugsteuerung wie folgt enthält:
- Fühlermittel (8) des Vorhandenseins dicht an der ersten, das Werkzeug (4) tragenden Platte (7), wobei es möglich ist, die Fühler dem montierten Werkzeug (4) gegenüberliegend zu positionieren und somit eine eindeutige Kontrolle der Grösse des Werkzeugs (4) zu erlauben;
- eine Einheit (9) zum Ablesen und Steuern eines Signals (S) von den Fühlermitteln (8) des Vorhandenseins, wobei das Signal der Grösse des montierten Werkzeugs (4) entspricht, und zum Verarbeiten von Geschwindigkeitsdaten (V), zusammenhängend mit der Grösse des montierten Werkzeugs (4), **dadurch gekennzeichnet, dass** die Ablese- und Steuereinheit (9) wenigstens einen ersten Dauerspeicher (12) für jedes montierbare Werkzeug (4) hat, enthaltend Daten, die einen Bereich anzeigen, welcher der Mindest- und Höchstgeschwindigkeit entspricht, welche durch das Werkzeug erreicht werden kann.

2. Einheit nach Patentanspruch 1, **dadurch gekennzeichnet, dass** die Fühlermittel des Vorhandenseins Annäherungsfühler (8) sind.

3. Einheit nach Patentanspruch 1, **dadurch gekennzeichnet, dass** die Fühlermittel (8) des Vorhandenseins eine Anzahl von Annäherungsfühlern (8a, 8b, 8c) enthalten, befestigt an einer zweiten Platte (10), die sich auf einer Ebene parallel zu der ersten Platte (7) erstreckt und zwischen letzterer und dem Sockel (2) eingesetzt ist.

4. Einheit nach Patentanspruch 3, **dadurch gekennzeichnet, dass** die Zahl der Annäherungsfühler (8) der Zahl der Werkzeuge (4) weniger eins entspricht, welche in der Maschine verwendet werden können.

5. Einheit nach Patentanspruch 3, **dadurch gekennzeichnet, dass** die Anzahl von Annäherungsfühlern (8) wenigstens drei enthält, angeordnet in radialen Richtungen im Verhältnis zu der Drehachse (X) eines Werkzeugs (4); wobei jeder Annäherungsfühler (8) von den anderen durch einen Mitte-Mitte-Abstand (ID) getrennt ist, der von dem Durchmesser (D) des zu kontrollierenden Werkzeugs (4) abhängt.

6. Einheit nach Patentanspruch 1, **dadurch gekennzeichnet, dass** die Ablese- und Steuereinheit (9) ein Element (11) zur Anzeige der optimalen Geschwindigkeit für das montierte Werkzeug (4) aufweist.

7. Einheit nach Patentanspruch 1, **dadurch gekennzeichnet, dass** es möglich ist, die Daten, welche die durch das Werkzeug erreichte Geschwindigkeit angeben, auf einem Display (11) zu sehen.

8. Einheit nach Patentanspruch 1, **dadurch gekennzeichnet, dass** die Ablese- und Steuereinheit (9) einen zweiten Datenspeicher (13) für jedes zu montierende Werkzeug (4) enthält, dazu bestimmt, die Daten der Geschwindigkeit zu speichern, welche von Hand eingegebenen werden kann und wenigstens niedriger ist als die maximale Geschwindigkeit, die durch das montierte Werkzeug (4) erreicht werden kann.

9. Einheit nach Patentanspruch 8, **dadurch gekennzeichnet, dass** die Ablese- und Steuereinheit (9) die von Hand in den zweiten Datenspeicher (13) eingegebene und gespeicherte Geschwindigkeit anzeigt, wenn das Werkzeug (4) ein nächstes Mal montiert wird.

10. Einheit nach Patentanspruch 1, **dadurch gekennzeichnet, dass** die Ablese- und Steuereinheit (9) an die Antriebseinheit (5) des Werkzeugs (4) angeschlossen ist und auf diese wirkt, wobei sie es dem Werkzeug (4) erlaubt, je nach der für das Werkzeug (4) eingestellten Geschwindigkeit einoder abgeschaltet zu werden.

## Revendications

1. Une unité de contrôle d'un outil pour une machine à usiner des pièces en bois ou similaires, la machine (1) étant du type comprenant au moins un bâti (2) qui supporte une table d'usinage (3) se développant horizontalement et destinée à soutenir les pièces à usiner ; au moins un outil (4) circulaire, motorisé (5), étant prévu sur la table d'usinage (3), tel outil (4) étant supporté par un groupe porte-outil (6) qui comprend au moins une première plaque circulaire (7) qui définit également l'axe de rotation (X) de l'outil (4), l'unité de contrôle d'un outil comprenant :
- des moyens capteurs de présence (8), à proximité de la première plaque (7) supportant l'outil (4), les capteurs pouvant être positionnés en face de l'outil (4) monté de manière à permettre un contrôle non équivoque de la taille de ce même outil (4) ;
- un unité (9) de lecture et de contrôle d'un signal (S) provenant des moyens capteurs de présence (8), le signal en question correspondant à la taille de l'outil (4) monté, et de traitement d'une donnée élémentaire de vitesse (V) corrélée avec la taille de l'outil (4) monté, ladite unité de contrôle d'un outil étant **caractérisée en ce que** l'unité de lecture et de contrôle (9) comprend au moins une première banque de mémoire permanente (12) pour chaque outil (4) pouvant être monté, contenant une donnée élémentaire de vitesse indiquant une plage équivalant à la vitesse minimum et maximum pouvant être atteinte par l'outil.

2. L'unité selon la revendication 1, **caractérisée en ce que** les moyens capteurs de présence sont des capteurs de proximité (8).

3. L'unité selon la revendication 1, **caractérisée en ce que** les moyens capteurs de présence (8) comprennent une pluralité de capteurs de proximité (8a, 8b, 8c) fixés à une seconde plaque (10) occupant un plan parallèle à la première plaque (7) et interposée entre cette dernière et le bâti (2).

4. L'unité selon la revendication 3, **caractérisée en ce que** le nombre de capteurs de proximité (8) correspond au nombre d'outils (4) pouvant être utilisés sur la machine moins un.

5. L'unité selon la revendication 3, **caractérisée en ce que** la pluralité de capteurs de proximité (8) en inclut au moins trois disposés dans des directions radiales par rapport à un axe de rotation (X) de l'outil (4) ; chaque capteur de proximité (8) étant séparé des autres d'un entraxe (ID) qui est fonction du diamètre (D) de l'outil (4) à contrôler.

6. L'unité selon la revendication 1, **caractérisée en ce que** l'unité de lecture et de contrôle (9) est pourvue d'un élément (11) pour l'affichage de la vitesse optimale relative à l'outil (4) monté.

7. L'unité selon la revendication 1, **caractérisée en ce que** la donnée élémentaire indiquant la vitesse atteinte par l'outil peut être visualisée sur un afficheur (11).

8. L'unité selon la revendication 1, **caractérisée en ce que** l'unité de lecture et de contrôle (9) comporte une seconde banque de mémoire (13) pour chaque outil (4) pouvant être monté et destinée à mémoriser une donnée élémentaire de vitesse, pouvant être définie manuellement, dont la valeur est au moins inférieure à la vitesse maximum pouvant être atteinte par l'outil (4) monté.

9. L'unité selon la revendication 8, **caractérisée en ce que** l'unité de lecture et de contrôle (9) affiche la vitesse définie manuellement et mémorisée dans la seconde banque de mémoire (13) lors du montage successif de l'outil (4) correspondant.

10. L'unité selon la revendication 1, **caractérisée en ce que** l'unité de lecture et de contrôle (9) est reliée à et agit sur la motorisation (5) de l'outil (4) de manière à permettre l'activation ou la désactivation de l'outil (4) en fonction de la vitesse définie pour ce même outil (4).
